# EUROPEAN PATENT APPLICATION

(11) **EP 2 672 667 A2**
(43) Date of publication of application: **11.12.2013**
(21) Application number: 12757084.4
(22) Date of filing: 09.03.2012
(51) Int. Cl.: H04L 12/58

(54) **METHOD AND SYSTEM FOR IMPLEMENTING IP-BASED VVM**

(30) Priority: 11.03.2011 CN 201110059749
(71) Applicant: ZTE Corporation, Shenzhen, Guangdong 518057 (CN)
(72) Inventor: LI, Lin, Shenzhen, Guangdong 518057 (CN); JIANG, Rong, Shenzhen, Guangdong 518057 (CN); WANG, Qi, Shenzhen, Guangdong 518057 (CN); LU, Yan, Shenzhen, Guangdong 518057 (CN); DING, Xin, Shenzhen, Guangdong 518057 (CN)
(74) Representative: Waddington, Richard
(86) International application number: PCT/CN2012/072106
(87) International publication number: WO 2012/122914

(57) **Abstract**

The embodiment of the invention relates to a method and system for implementing an IP based Visual Voice Mail (VVM). The method includes: establishing a Socket connection between a VVM client and a VVM server; and implementing message transmission between the VVM client and the VVM server through the Socket connection. The method and system for implementing an IP based VVM of the embodiment of the invention implement the VVM service through the Socket connection, so that the VVM service can be implemented on an IP based terminal device.

## Description

### Technical Field

The invention relates to the field of communication system, and in particular, to a method and system for implementing an IP based Visual Voice Mail in the communication system.

### Background of the Related Art

The Visual Voice Mail (VVM) application provides a quick way and a brand new experience of receiving and managing the voice mail through a visual Graphical User Interface (GUI) for the voice mail user, which avoids the inconvenience of using the voice mail service through the voice call traditionally.

The current Visual Voice Mail is only used on the cell phone client, and even the current protocol specification also only considers the interactive specification between the VVM cell phone client and the server. However, along with the increasing development of the communication technology and IT technology, various communication networks are integrated with each other; the integration of the telecommunication network, the Internet network and the broadcast & television network further creates the emergence of various types of terminals, such as, computer, TV accessible to the network, tablet PC, etc., which are referred to as the IP based Clients here collectively.

These various types of terminals, under the integration network environment, can provide various types of integration services. For the Visual Voice Mail service, the user can receive and manage the voice under the visual GUI conveniently through the installed IP based VVM client software by means of various types of IP based VVM client devices, such as one's own PC machine, iPad, etc. And, the same user, so long as having the VVM account, can use many kinds of IP based VVM client terminal devices, and can also use its cell phone VVM client certainly.

In the current specification OMTP VVM 1.3, the message mechanism defined between the server and the VVM client is to send a Short Message Service (SMS) short message between the VVM server and the client for informing the client of the user of postbox event, and inquiring the state of opening or closing an account of a user, etc.; and the SMS short message is unable to support the IP based client.

### Summary of the Invention

A method for implementing an IP based Visual Voice Mail (VVM) according to some embodiments of the invention is provided, comprising:
establishing a Socket connection between a VVM client and a VVM server; and
implementing message transmission between the VVM client and the VVM server through the Socket connection.

Preferably, establishment of the Socket connection between the VVM client and the VVM server is initiated by the VVM client, and the VVM client initiates a heartbeat message to detect the Socket connection regularly after the connection is successfully established; and the VVM client re-initiates the Socket connection when detecting that the Socket connection fails.

Preferably, establishment of the Socket connection used for transmitting a message to the VVM server by the VVM client is initiated by the VVM client, and the VVM client disconnects the Socket connection after transmitting the message.

Preferably, establishment of the Socket connection used for transmitting a message to the VVM client by the VVM server is initiated by the VVM server, and the VVM server disconnects the Socket connection after transmitting the message; before the VVM server initiates the Socket connection, the method further comprises:
the VVM client initiating the Socket connection to the VVM server;
the VVM server recording an IP address of the VVM client after the connection is successfully established;
the VVM client disconnecting the Socket connection; and
the VVM server initiating the Socket connection according to the recorded IP address of the VVM client.

Preferably, the message transmitted through the Socket connection adopts a same message type and content format as a short message service (SMS).

Preferably, the message transmitted through the Socket connection comprises a message used for system notification and/or mail management.

A system for implementing an IP based Visual Voice Mail (VVM) is further provided by the embodiment of the invention, comprising:
connection establishing modules of a VVM client and a VVM server, configured to establish a Socket connection; and
message transmission modules of the VVM client and the VVM server, configured to implement message transmission through the Socket connection.

Preferably, the VVM client and the VVM server further comprise connection detection modules, wherein, the connection detection module of the VVM client is configured to initiate a heartbeat message to detect the Socket connection regularly after the connection succeeds; and the connection establishing module of the VVM client is configured to initiate establishment of the Socket connection to the VVM server, and re-initiate the Socket connection when detecting that the Socket connection fails; and
the connection detection module of the VVM server is configured to respond to the connection detection module of the VVM client; and the connection establishing module of the VVM server is configured to respond to the connection establishing module of the VVM client.

Preferably, the connection establishing module of the VVM client is further configured to: initiate establishment of the Socket connection before the message transmission module of the VVM client transmits the message to the VVM server, and disconnect the Socket connection after the message is transmitted.

Preferably, the connection establishing module of the VVM server is further configured to: record an IP address of the VVM client after the Socket connection initiated by the VVM client is established successfully, and initiate the Socket connection by using the IP address of the VVM client before the message transmission module of the VVM server transmits the message to the VVM client, and disconnect the Socket connection after the message is transmitted.

Preferably, the messages transmitted through the Socket connection by the message transmission modules of the VVM client and the VVM server adopt a same message type and content format as a short message service (SMS).

Preferably, the messages transmitted through the Socket connection by the message transmission modules of the VVM client and the VVM server comprise messages used for system notification and/or mail management.

The system and its implementation method of the specification implement the VVM service by means of a Socket channel, so that the IP based terminal device is also able to support the VVM service, which brings the maximal use convenience to the user, improves the user experience and promotes the use and the development of VVM service.

### Brief Description of Drawings

FIG. 1 is a diagram of a system for implementing an IP based VVM according to an embodiment of the invention;
FIG. 2 is a diagram of a method for implementing VVM through a Socket connection with a long connection mode according to an embodiment of the invention;
FIG. 3 is a diagram of a method for implementing VVM through a Socket connection with a short connection mode according to an embodiment of the invention;
FIG. 4 is a module structure diagram of a system for implementing an IP based VVM according to embodiment 1 of the invention; and
FIG. 5 is a module structure diagram of a system for implementing an IP based VVM according to embodiment 2 of the invention.

### Preferred Embodiments of the Invention

The main idea of the method for implementing the IP based Visual Voice Mail (VVM) of the specification is to establish a Socket connection between the VVM client and the VVM server, and implement the message transmission through the Socket connection between the VVM client and the VVM server.

The Socket connection described in the specification is also called a Socket channel, which refers to all socket data channels and data communication mechanisms generally.

The specification is suitable for all IP based VVM clients, the clients are run on an IP based terminal device, including but not limited to a VVM client on a PC, a VVM client on a tablet computer, a VVM client on a TV.

The mail interacted between the VVM client and the VVM server not only includes a voice mail, but also includes a fax-mail and a video mail.

The examples of the invention will be described in detail with reference to the accompanying drawings. It should be illustrated that, in the case of not conflicting, the examples in the present application and features in these examples can be combined with each other.

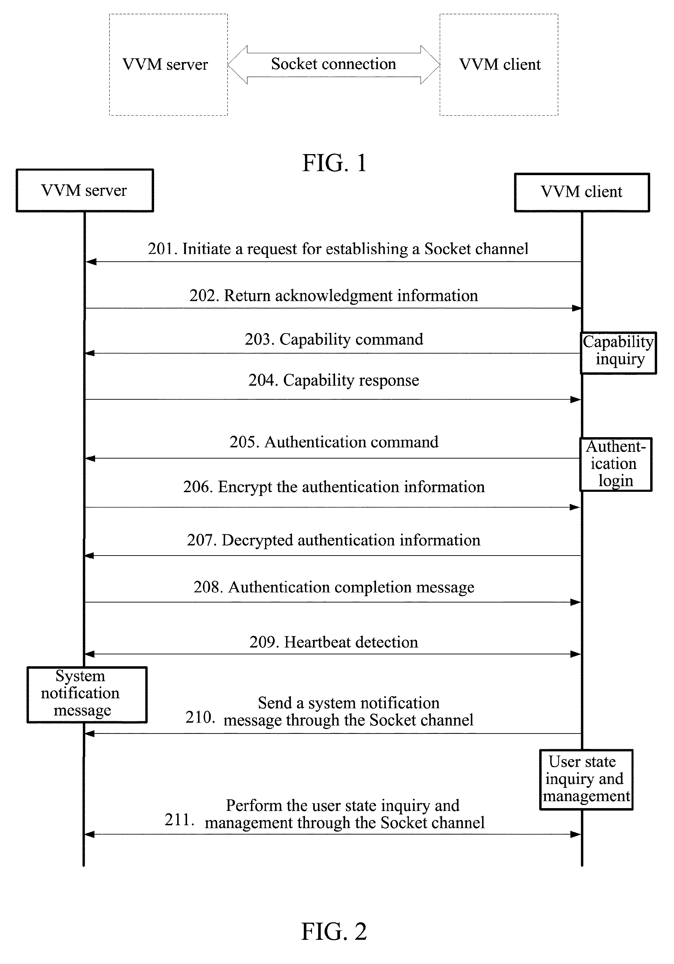

As shown in FIG. 1, the implementation system supporting an IP based VVM includes:
(1), a Visual Voice Mail (VVM) server: in order to serve for a VVM client, the VVM system has a VVM protocol processing function in addition to the basic voice mail function, so as to perform the interaction with the VVM client through an agreed protocol, cooperate and implement a notifying and downloading function of new voice mails; unlike the related art, the VVM server is also responsible for managing the socket communication in the server.
(2), a VVM client at the terminal side: a software realizing the VVM function at the IP based terminal side, and the software is connected to the VVM server and downloads the voice mail and other agreed operations through the agreed protocol; unlike the related art, the VVM client is also responsible for the application and management of the socket communication in the client.

As shown in the figure, the VVM server communicates with the VVM client through the Socket connection established therebetween.

### Example 1

In the present example,
the VVM client voluntarily initiates establishment of a long connection with the VVM server, the client establishes and keeps the Socket connection with the server by transmitting a heartbeat message packet regularly, performs a password security certification authentication with the opposite side after the connection is successfully established, and the client initiates heartbeat detection regularly after the authentication succeeds, to maintain the Socket connection. When it is found that the heartbeat detection dose not obtain a response from the VVM server, then it is considered that the connection is detected to have failed, and the client initiates and establishes a Socket connection again.

The service process of a long connection mode will be illustrated below with reference to FIG. 2:
in step 201: the VVM client initiates a request to establish the Socket channel (that is, the Socket connection request);
the IP Based VVM client voluntarily initiates a connection request to establish the Socket channel to the VVM server when it is started;
in step 202: the VVM server returns acknowledgment information to the VVM client;
in step 203: the VVM client sends a Capability Command (a kind of IMAP4 protocol command) to the VVM server to perform capability inquiry (also can be called capability consulting);
in step 204: the VVM server responds a Capability Response (a kind of IMAP4 protocol command) to the VVM client, to indicate that the VVM server possesses the capability to provide the VVM service;
in step 205: the VVM client sends an Authenticate Command (a kind of IMAP4 protocol command) to the VVM server to request for authentication;
in step 206, the VVM server returns the authentication information encrypted by the MD5 based on the base64 code;
in step 207, the VVM client obtains decrypted authentication information based on the base64 code using MD5 algorithm;
in step 208: the VVM server sends an authentication completion message to the VVM client, to indicate that the authentication succeeds;
the certification process between the VVM client and the server is finished, and the channel can perform the service communication.

In step 209: the VVM client and the VVM server perform the heartbeat detection;
the VVM client initiates the heartbeat detection message regularly, the VVM server feeds back the heartbeat detection response message after receiving the heartbeat detection message, and the VVM client detects and maintains the state of the Socket channel according to the response message of the VVM server.

When it is found that the heartbeat detection does not obtain the response of the VVM server, it is considered that the connection is detected to have failed, then the flow of the client initiating the Socket connection request to the server is proceeded again.

In step 210: the VVM server generates a system notification message, and then sends it to the VVM client through the established Socket channel;

If the connection exists, the server side can send the system notification message to the client through the Socket channel when there is the system notification message, and the message format can adopt the format of the SMS message defined in the current protocol.

The system notification message is a message sent to the VVM client by the system, used for informing the client of the greetings in the postbox or that change of the mail state. For the following situations (including but not limited to), a system notification message will be sent:
receiving a new mail in the user information;
deleting the overdue mail;
canceling the Text User Interface (TUI, telephone user interface) conversation;
recording or deleting the greetings through the TUI, including personal greetings or voice signature.

In step 211: the VVM client interacts with the VVM server through the Socket channel to perform the user state inquiry and management.

Through the Socket connection channel, the VVM client interacts the socket message with the VVM server to realize the following functions of mail management:
inquiring a state of opening or closing an account of a registered user;
activating / deactivating a service.

The format of the message in the Socket channel can adopt the format of the SMS message in the current protocol, and also can be other self-defined message formats.

The above-mentioned step 210 and step 211 do not have a precedence order.

### Example 2

The Socket connection in the present example is a short connection mode.

Since the VVM server does not know the IP address of the VVM client in advance, while the client knows the IP address of the server, the client can establish the Socket connection voluntarily with the server when the client is started, and then performs the authentication by using the Socket connection; after the authentication is passed, the server records the IP address of the client, and then disconnects the Socket connection. Later if the server has a message to notify the client voluntarily, then it can connect the IP address of the client voluntarily, and sends a downlink message to the client through the Socket channel initiated and established by the server, and then disconnects the connection. As for an uplink message, the Socket connection is initiated by the client and then the message is sent to the server, and the connection is disconnected after sending is finished. Certainly, if the connection fails when the server initiates the downlink connection, it proves that the client is already shutdown and off line, and the previous IP registration can be logged off.

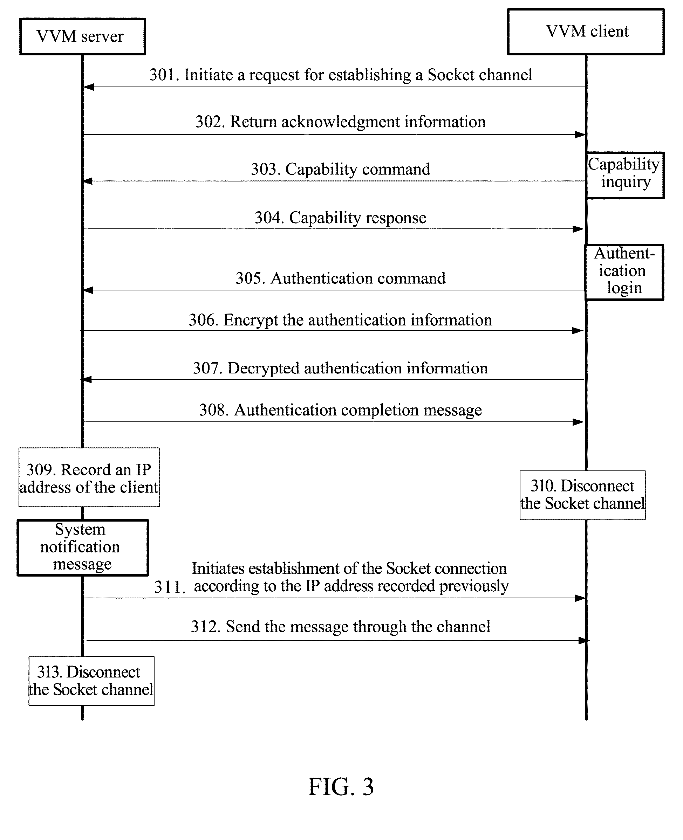

The service process of a short connection mode will be illustrated below with reference to FIG. 3:
in step 301: the VVM client initiates a request to establish the Socket channel (that is, the Socket connection request);
the IP Based VVM client voluntarily initiates a connection request to establish the Socket channel to the VVM server when it is started;
in step 302: the VVM server returns acknowledgment information to the VVM client;
in step 303: the VVM client sends a Capability Command (a kind of IMAP4 protocol command) to the VVM server to perform the capability inquiry (also can be called capability consulting);
in step 304: the VVM server returns a Capability Response (a kind of IMAP4 protocol command) to the VVM client, to indicate that the VVM server possesses the capability to provide the VVM service;
in step 305: the VVM client sends an Authenticate Command (a kind of IMAP4 protocol command) to the VVM server to request for authentication;
in step 306, the VVM server returns the authentication information encrypted by the MD5 based on the base64 code;
in step 307, the VVM client obtains decrypted authentication information based on the base64 code using MD5 algorithm;
in step 308: the VVM server sends an authentication completion message to the VVM client, to indicate that the authentication succeeds;
the certification process between the VVM client and the server is finished, and the channel can perform the service communication.

In step 309: after the authentication succeeds, the VVM server records the IP address of the VVM client;
in step 310: the VVM client disconnects the Socket connection;
in step 311: if the VVM server has a notification message required to be sent to the client, the server voluntarily initiates the Socket connection request according to the IP address recorded previously;
if the VVM server fails to initiate the connection, it proves that the VVM client is already shutdown and offline, and the previous IP address record can be logged off.

In step 312: if the connection succeeds, the VVM server sends a message, such as, the greetings or change of the mail state, etc., to the VVM client;
in step 313: after the sending is finished, the VVM server disconnects the Socket connection.

In the present embodiment, the format of the message in the Socket channel can adopt the format of the SMS message in the current protocol, and also can be other self-defined message formats.

In the above-mentioned procedures, the server performs the authentication to the client firstly, and only records the IP address of the client after the authentication succeeds, which is a preferable implementation scheme; certainly, it can also record the IP address of the client firstly, and then deletes the recorded IP address when the authentication fails.

In the method of the examples of the invention, in addition to the original message service (Short Message Service, SMS) notification mechanism, a message notification mechanism of the data channel way (socket) is added in the message notification mechanism for implementing the visual mail function between the VVM client and the VVM server (including but not limited to the Open Mobile Terminal Platform organization (OMTP) or other self-defined communication protocols), for supporting the IP based VVM client.

The IP based terminal device establishes a socket communication channel between the client and the server by initiating by the client, and thus implements the message transmission between the VVM server and the VVM client.

Corresponding to the message of the SMS type in the existing protocol,
the same message type and content format as defined in the SMS way are transmitted in the Socket channel established by the IP based VVM client, including: the message initiated by the system and the message initiated by the client. The message initiated by the system is used for being sent to the VVM client to inform the user of the specific event about the postbox configuration or the configuration file; while the user can inquire the user state information through the socket message or set the service notification development through the message initiated by the client. The message type and content format that are self-defined can also be transmitted in the channel.

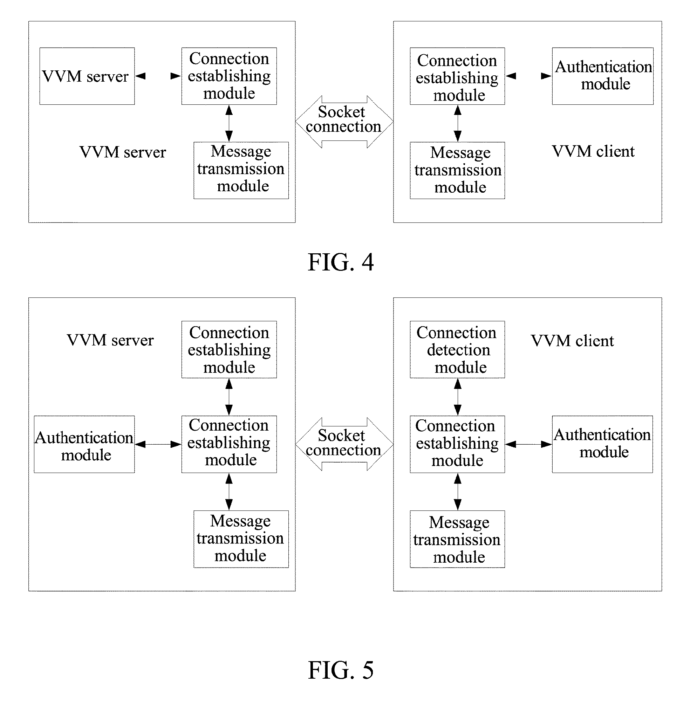

Corresponding to the above method, another example of the invention further provides a system for implementing an IP based Visual Voice Mail (VVM). The system mainly includes a VVM client and a VVM server, as shown in FIG. 4 and FIG. 5, including:
connection establishing modules of the VVM client and the VVM server, used for establishing a Socket connection; and
message transmission modules of the VVM client and the VVM server, used for implementing the message transmission through the Socket connection.

In the short connection mode, the connection establishing module of the VVM client of the system example 1 initiates establishment of the Socket connection before the message transmission module of the VVM client transmits the message to the VVM server, and is also used for disconnecting the Socket connection after the message is transmitted.

Preferably, the connection establishing module of the VVM server records an IP address of the VVM client after the Socket connection initiated by the VVM client is established successfully, and initiates the Socket connection by using the IP address of the VVM client before the message transmission module of the VVM server transmits the message to the VVM client, and is also used for disconnecting the Socket connection after the message is transmitted.

Preferably, as shown in FIG. 4, the VVM client and the VVM server further include authentication modules used for authentication after the Socket connection successfully established; the connection establishing module of the VVM server records the IP address of the VVM client again when the Socket connection successfully established and the authentication succeeds.

In the long connection mode, as shown in FIG. 5, the VVM client and the VVM server of the system example 2 further include connection detection modules, wherein, the connection detection module of the VVM client is used for initiating a heartbeat message to detect the Socket connection regularly after the connection succeeds; and the connection establishing module of the VVM client is used for initiating establishment of the Socket connection to the VVM server, and re-initiating establishment of the Socket connection when detecting that the Socket connection fails;

the connection detection module of the VVM server is used for responding to the connection detection module of the VVM client; and the connection establishing module of the VVM server is used for responding to the connection establishing module of the VVM client.

Preferably, the VVM client and the VVM server further include authentication modules used for authentication after the Socket connection succeeds; the connection detection module of the VVM client detects the Socket connection again when the Socket connection succeeds and the authentication succeeds.

Preferably, the messages transmitted through the Socket connection by the message transmission modules of the VVM client and the VVM server adopt the same message type and content format as the short message service (SMS), and the messages transmitted through the Socket include the messages used for system notification and/or mail management.

The system and its implementation method of the embodiment of the invention have the following main beneficial effects:
the user can use the VVM service not only through the cell phone, but also through PC, tablet computer or other Net surfing terminal devices, which brings the maximal use convenience to the user, and can improve the user experience and promote the use and the development of VVM service at the same time;
the user can manage one's own voice mail, fax mail and video mail through various VVM client software conveniently; comparatively speaking, both the operability and the manageability of the cell phone are not comparable to the devices, such as the computer, etc., and the memory capacity is not comparable to the devices, such as the computer, etc., so the expansion of the VVM client can make the Visual characteristic of the Visual Voice mail service get a larger development space;
the VVM service is made to be truly integrated with the united message service (UMS) and many kinds of network application environments, thus it gets a broader application space; for the operator providing the VVM service, it can attract more persons to use the VVM function, and makes the service easier to be used and popularized, and thus it also can increase profits.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The invention is not limit to any specific form of the combination of the hardware and software.

### Industrial Applicability

The system and its implementation method of the embodiment of the invention implement the VVM service by means of a Socket channel, so that the IP based terminal device is also able to support the VVM service, which brings along the maximal use convenience to the user, improves the user experience and promotes the use and the development of VVM service.

## Claims

1. A method for implementing an IP based Visual Voice Mail (VVM), comprising:
establishing a Socket connection between a VVM client and a VVM server; and
implementing message transmission between the VVM client and the VVM server through the Socket connection.

2. The method according to claim 1, wherein, establishment of the Socket connection between the VVM client and the VVM server is initiated by the VVM client, and the VVM client initiates a heartbeat message to detect the Socket connection regularly after the connection is successfully established; and the VVM client re-initiates the Socket connection when detecting that the Socket connection fails.

3. The method according to claim 1, wherein,
establishment of the Socket connection through a message transmitted by the VVM client to the VVM server is initiated by the VVM client, and the VVM client disconnects the Socket connection after transmitting the message.

4. The method according to claim 1, wherein,
establishment of the Socket connection through a message transmitted by the VVM server to the VVM client is initiated by the VVM server, and the VVM server disconnects the Socket connection after transmitting the message; before the VVM server initiates the Socket connection, the method further comprises:
the VVM client initiating the Socket connection to the VVM server;
the VVM server recording an IP address of the VVM client after the connection is successfully established;
the VVM client disconnecting the Socket connection; and
the VVM server initiating the Socket connection according to the recorded IP address of the VVM client.

5. The method according to any one of claims 1 to 4, wherein, the message transmitted through the Socket connection adopts the same message type and content format as short message service (SMS).

6. The method according to any one of claims 1 to 4, wherein, the message transmitted through the Socket connection comprises a message used for system notification and/or mail management.

7. A system for implementing an IP based Visual Voice Mail (VVM), comprising:
connection establishing modules of a VVM client and a VVM server, configured to establish a Socket connection; and
message transmission modules of the VVM client and the VVM server, configured to implement message transmission through the Socket connection.

8. The system according to claim 7, wherein, the VVM client and the VVM server further comprise connection detection modules, wherein, the connection detection module of the VVM client is configured to initiate a heartbeat message to detect the Socket connection regularly after the connection succeeds; and the connection establishing module of the VVM client is configured to initiate establishment of the Socket connection to the VVM server, and re-initiate the Socket connection when detecting that the Socket connection fails; and
the connection detection module of the VVM server is configured to respond to the connection detection module of the VVM client; and the connection establishing module of the VVM server is configured to respond to the connection establishing module of the VVM client.

9. The system according to claim 7, wherein,
the connection establishing module of the VVM client is further configured to: initiate establishment of the Socket connection before the message transmission module of the VVM client transmits a message to the VVM server, and disconnect the Socket connection after the message is transmitted.

10. The system according to claim 7, wherein,
the connection establishing module of the VVM server is further configured to: record an IP address of the VVM client after the Socket connection initiated by the VVM client is established successfully, and initiate the Socket connection by using the IP address of the VVM client before the message transmission module of the VVM server transmits a message to the VVM client, and disconnect the Socket connection after the message is transmitted.

11. The system according to any one of claims 7 to 10, wherein, messages transmitted through the Socket connection by the message transmission modules of the VVM client and the VVM server adopt the same message type and content format as short message service (SMS).

12. The system according to any one of claims 7 to 10, wherein, messages transmitted through the Socket connection by the message transmission modules of the VVM client and the VVM server comprise messages used for system notification and/or mail management.
